**Europäisches Patentamt**

**European Patent Office**

**Office européen des brevets**

(19)

(11) Publication number : **0 661 301 A1**

## (12) EUROPEAN PATENT APPLICATION

(21) Application number : **94309424.3**

(22) Date of filing : **16.12.94**

(51) Int. Cl.$^6$ : **C08F 10/00, C08F 4/657**

(30) Priority : **17.12.93 US 169608**

(43) Date of publication of application :
**05.07.95 Bulletin 95/27**

(84) Designated Contracting States :
**AT BE DE ES FR GB GR IT NL PT SE**

(71) Applicant : **UNION CARBIDE CHEMICALS & PLASTICS TECHNOLOGY CORPORATION**
**39 Old Ridgebury Road**
**Danbury, Connecticut 06817-0001 (US)**

(72) Inventor : **Lucas, Eric Allan**
**219 Altamont Place**
**Somerville, NJ 08876-1401 (US)**

(74) Representative : **Allard, Susan Joyce et al**
**BOULT, WADE & TENNANT**
**27 Furnival Street**
**London EC4A 1PQ (GB)**

(54) **Process for producing ethylene polymers having reduced hexane extractable content.**

(57)   A catalyst system of the Ziegler-Natta type suitable for producing ethylene copolymers having a reduced hexane extractable content comprising (a) an organoaluminum component and (b) a titanium trichloride component which has been prepared by reducing titanium tetrachloride with a metal having a reducing potential higher than -1.5 V (vs. hydrogen electrode standard), such as zinc or manganese.

EP 0 661 301 A1

FIELD OF THE INVENTION

This invention relates to a catalyst system of the Ziegler-Natta type suitable for producing ethylene polymers having a reduced hexane extractable content comprising (a) an organoaluminum component and (b) a titanium trichloride component which has been prepared by reducing titanium tetrachloride with a metal having a reducing potential higher than -1.5 volts (V) (vs. hydrogen electrode standard).

BACKGROUND OF THE INVENTION

Titanium trichloride is a well known component of Ziegler-Natta catalyst systems. The titanium trichloride employed in such systems is commercially available and most commonly produced by the reduction of titanium tetrachloride with aluminum metal. While catalysts employing titanium trichloride produced in this manner are extremely active, such catalysts have been found to promote the production of blocky resins having undesirably elevated levels of extractables and volatile oils when employed in the copolymerization of ethylene with higher alpha-olefins such as hexene. The cause of this high level of extractables and volatile oils has been attributed, at least in part, to the presence in such catalysts of a mixed crystal, $TiCl_3 \cdot 1/3\ AlCl_3$, which is known to be produced when titanium tetrachloride is reduced with aluminum metal.

Titanium trichloride suitable for use in Ziegler-Natta catalyst systems can also be prepared by the reduction of titanium tetrachloride with hydrogen gas. However, this method is extremely costly and results in the production of an environmentally undesirable by-product, i.e., hydrogen chloride.

Still another method of producing titanium trichloride is by reducing titanium tetrachloride with an organomagnesium compound such as a dialkylmagnesium compound or an alkyl magnesium halide. However, this method also is extremely costly and, like the hydrogen reduction method, results in the formation of undesirable reaction by-products, in this case chlorinated alkanes.

Copending application Serial No. 07/926,633 teaches that titanium trichloride can be prepared by reducing titanium tetrachloride with magnesium metal, and that the titanium trichloride prepared in this manner can be employed together with an organoaluminum cocatalyst to copolymerize ethylene with higher alpha-olefins such as hexene to produce ethylene copolymers having a reduced hexane extractable content. Unfortunately, the reduction reaction of titanium tetrachloride with magnesium metal is difficult to control. As a result, some of the titanium tetrachloride employed is overly reduced to titanium dichloride, while some is not reduced at all. Thus, in addition to the desired $TiCl_3$, a small amount of $TiCl_2$ and $TiCl_4$ can be found in the final product. The overly reduced material, $TiCl_2$, has been shown to be inactive in olefin polymerization, while the unreduced material, $TiCl_4$, has been blamed for activity and bulk density problems. Because of the mixture of products produced, this method of reducing titanium tetrachloride is also not entirely satisfactory.

SUMMARY OF THE INVENTION

The present invention provides an improved method of reducing titanium tetrachloride to produce titanium trichloride which can be employed together with an organoaluminum cocatalyst to copolymerize ethylene with higher alpha-olefins to produce ethylene copolymers having a reduced hexane extractable content, which method comprises treating titanium tetrachloride with a sufficient amount of a metal having a reducing potential higher than -1.5 V (vs. hydrogen electrode standard) to reduce said titanium tetrachloride to titanium trichloride. According to this method, reduction of titanium tetrachloride to titanium trichloride takes place in an electron donor solvent and results in the formation of titanium trichloride and a chloride of the reducing metal. The titanium trichloride forms a soluble complex with the electron donor and remains in solution. The reducing metal chloride, on the other hand, is insoluble and precipitates from solution. This precipitate is removed by filtration and magnesium dichloride is added to the solution in an amount sufficient to produce a catalyst component having a desired Mg/Ti ratio. The solution is then impregnated in a suitable support or, alternatively, spray dried with or without a suitable filler, to obtain discrete particles of the desired catalyst. Thus, the present invention provides an improved catalyst system suitable for producing ethylene copolymers having a reduced hexane extractable content comprising

(a) an organoaluminum component, and
(b) a titanium trichloride component prepared by (i) reducing titanium tetrachloride with a metal having a reducing potential higher than -1.5 V (vs. hydrogen electrode standard) by treating titanium tetrachloride in an electron donor solvent with a sufficient amount of the metal to reduce said titanium tetrachloride to titanium trichloride and produce an insoluble chloride of such metal; (ii) removing the insoluble chloride of said reducing metal by filtration; (iii) adding magnesium dichloride to the resulting solution to produce a catalyst component having a desired Mg/Ti ratio; and then (iv) impregnating said solution in a suitable support or, alternatively, spray drying the solution with or without a suitable filler, to obtain discrete particles of catalyst.

The catalyst system prepared in this manner is substantially free of unwanted impurities such as $AlCl_3$, $TiCl_2$ and $TiCl_4$, and can be employed to copolymerize ethylene with higher alpha-olefins to produce ethylene copolymers having a reduced hexane extractable content. In addition to providing a catalyst system which is substantially free of unwanted impurities, the invention provides a unique method of preparing said catalyst system whereby the titanium trichloride component is prepared in situ, i.e., without the necessity of producing and isolating this extremely corrosive, highly water-reactive, difficult to handle material. Thus, the invention provides a convenient means of preparing the catalyst which both eliminates the need for direct handling of titanium trichloride and minimizes the presence of unwanted impurities.

## DETAILED DESCRIPTION OF THE INVENTION

Reduction of titanium tetrachloride with a metal having a reducing potential higher than -1.5 V (vs. hydrogen electrode standard) according to the present invention takes place in an electron donor solvent and results in the formation of titanium trichloride and a chloride of the reducing metal. The titanium trichloride forms a soluble complex with the electron donor and remains in solution. The reducing metal chloride, on the other hand, is insoluble and precipitates from solution. The reaction which occurs when tetrahydrofuran (THF) is employed as solvent and zinc is employed as the reducing metal can be illustrated by the following equation:

$$THF \ Zn + 2 \ TiCl_4 \rightarrow ZnCl_2 + 2 \ TiCl_3(THF)_3$$

The electron donor compound employed as solvent for the reaction is an organic compound which is liquid at 25°C and in which the titanium tetrachloride employed, as well as the titanium trichloride complex produced, are soluble. The electron donor compound employed, however, must be free of radicals containing active hydrogen, such as alcohol radicals, as such radicals readily react with both the reducing metal and the titanium tetrachloride. The electron donor compounds are sometimes also referred to as Lewis bases.

Suitable electron donor compounds include alkyl esters of aliphatic and aromatic carboxylic acids, aliphatic ethers, cycloaliphatic ethers and aliphatic ketones. Particularly useful are alkyl esters of saturated aliphatic carboxylic acids containing from 1 to 4 carbon atoms; alkyl esters of aromatic carboxylic acids containing from 7 to 8 carbon atoms; aliphatic ethers containing from 2 to 8 carbon atoms, preferably from 4 to 5 carbon atoms; cycloaliphatic ethers containing from 4 to 5 carbon atoms, preferably mono- or di-ethers containing 4 carbon atoms; and aliphatic ketones containing from 3 to 6 carbon atoms, preferably from 3 to 4 carbon atoms. The most preferred electron donor is tetrahydrofuran. If desired, these electron donor compounds may be substituted with one or more substituents which are inert under the reaction conditions employed during reduction of the titanium tetrachloride and subsequent polymerization with the reduced product.

In order to more effectively control the reduction of titanium tetrachloride to titanium trichloride, and limit undesirable overreduction of titanium tetrachloride to titanium dichloride, the metal employed to effect the reduction should have a reducing potential higher than -1.5 V (vs. hydrogen electrode standard). Metals having a reducing potential lower than -1.5 V (e.g., magnesium, which has a reducing potential of -2.4 V) have an undesirably high overpotential for the reduction of titanium tetrachloride which can result in the formation of excessive amounts of titanium dichloride. Such metals should be avoided.

In addition to having a reducing potential higher than -1.5 V, the metal employed in the present invention must form a metal chloride as a result of the reaction with titanium tetrachloride which is essentially insoluble in the electron donor compound employed as solvent in order to allow for easy removal of this reaction byproduct from the solution. Zinc, which forms an insoluble chloride and has a reducing potential of -0.8 V (or -0.7 V overpotential compared to $Ti^{+3}$ which has a reducing potential of -0.1 V) is particularly suitable. Manganese, which also forms an insoluble chloride and has a reducing potential of -1.0 V (or -0.9 V overpotential compared to $Ti^{+3}$) is also suitable. Both these metals have been found to effect a greater than 98% reduction of $TiCl_4$ to $TiCl_3$.

Because the reducing metals employed in the present invention are highly reactive with titanium tetrachloride, it is preferable to employ them in granular form rather than as a powder. The use of larger granular particles of metal rather than the more minute powder form limits the reactivity of the metal and allows the reaction to proceed in a smoother and more controlled manner. Usually reducing metal particles having an average particle size of from about 0.10 μm to about 10 μm, preferably from about 0.10 μm to about 1μm, are employed.

Reduction of titanium tetrachloride to titanium trichloride is effected using at least a stoichiometric amount of reducing metal required to effect the reduction, i.e., at least one gram atom of reducing metal is employed for every two moles of titanium tetrachloride. At least a stoichiometric amount of reducing metal is required to completely reduce the titanium tetrachloride to titanium trichloride. It is preferred that no more than 1.1 gram atom of reducing metal be employed for every two moles of titanium tetrachloride. Most preferably, a stoichio-

EP 0 661 301 A1

metric amount of reducing metal is employed.

Reduction of titanium tetrachloride with the reducing metal, as previously noted, is effected in an electron donor compound. About 5 mols to 400 mols of electron donor compound are advantageously employed per mol of titanium tetrachloride, preferably about 50 mols to 200 mols of electron donor compound per mol of titanium tetrachloride.

Usually the titanium tetrachloride is added to a mixture of the reducing metal and electron donor compound, but it is also possible to add the reducing metal to a solution of the titanium tetrachloride in the electron donor compound, or even to add the titanium tetrachloride and reducing metal to the electron donor compound together. Ordinarily reaction is effected below the boiling point of the electron donor compound, preferably between 50°C and 70°C. An inert atmosphere should be maintained, i.e., an atmosphere which is nonreactive under the conditions employed during reduction of the titanium tetrachloride with the reducing metal.

The reduction of titanium tetrachloride with the reducing metal results in a solution of titanium trichloride in the electron donor compound and the precipitation of an insoluble chloride of the reducing metal from the solution. In order to complete formation of the desired catalyst component, it is only necessary to separate the insoluble metal chloride from the solution by filtration and add magnesium dichloride to the solution in an amount sufficient to produce a catalyst component having a desired Mg/Ti ratio. The solution can then be impregnated in a suitable support, or spray dried with or without a suitable filler, to obtain discrete particles of the desired catalyst.

The amount of magnesium dichloride added to the solution usually depends upon whether the solution is to be impregnated in a suitable support or spray dried. Because drying is not constrained to occur completely within the pores of a support when the solution is spray dried, higher amounts of magnesium dichloride are ordinarily employed when this procedure is followed than when the solution is impregnated in a support. Generally, sufficient magnesium dichloride is added to the solution to produce a Mg/Ti ratio of from 1:1 to 56:1, preferably of from 1.5:1 to 5:1. When the solution is to be spray dried, it is preferable to add sufficient magnesium dichloride to produce a Mg/Ti ratio of from 1.5:1 to 15:1, most preferably of from 4:1 to 6:1. On the other hand, when the solution is to be impregnated in a support, it is preferable to add sufficient magnesium dichloride to produce a Mg/Ti ratio of from 1.5:1 to 10:1, most preferably of from 2:1 to 5:1.

Dissolution of magnesium dichloride in the electron donor solution can be effected by stirring the magnesium dichloride in the electron donor solution at a temperature of from about 20°C up to the boiling point of the electron donor compound. Because magnesium dichloride more readily dissolves in the electron donor compound in the presence of titanium tetrachloride than in the presence of titanium trichloride, in those instances when the titanium tetrachloride is to be reduced to titanium trichloride by adding the reducing metal to a solution of the titanium tetrachloride in the electron donor compound, it may be preferable to dissolve both the magnesium dichloride and the titanium tetrachloride in the electron donor compound before the reducing metal is added. The magnesium dichloride can, of course, also be dissolved in a mixture of the reducing metal and electron donor compound before the titanium tetrachloride is added to the mixture, but there appears to be no special advantage in doing so.

The solution of titanium trichloride and magnesium dichloride prepared in this manner is then impregnated in a suitable support or, alternatively, spray dried with or without a suitable filler, to obtain discrete particles of the desired catalyst.

The impregnated or spray dried catalyst component prepared in this manner has the formula

$$Mg_mTiCl_p[ED]_q$$

wherein

ED is an electron donor compound,

m is 1 to 56, preferably 1.5 to 5,

p is 5 to 115, preferably 6 to 13, and

q is 2 to 85, preferably 3 to 12.

The solution of titanium trichloride and magnesium dichloride in the electron donor compound may be impregnated in a suitable support by admixing the support with the solution and removing excess electron donor compound by drying at temperatures up to about 100°C.

The materials which can be employed as supports are solid, particulate, porous materials which are inert to the other components of the catalyst system, and during subsequent polymerization. Suitable support materials include inorganic materials such as oxides of silicon and/or aluminum. Usually these materials have an average particle size of from about 10 microns to about 250 microns, preferably from about 10 microns to about 150 microns, and a surface area of at least 3 square meters per gram, preferably at least 50 square meters per gram. Polymerization activity of the catalyst can be improved by employing a silica support having an average pore size of at least 80 Angstrom units, preferably at least 100 Angstrom units. The support material should be dry, that is, free of absorbed water. Drying of the support material can be effected by heating, e.g., at a

4

temperature of at least 600°C when silica is employed as the support. Alternatively, when silica is employed, it may be dried at a temperature of at least 200°C and treated with about 1 weight percent to about 8 weight percent of one or more of the aluminum activator compounds described below. Modification of the support with an aluminum compound in this manner increases catalyst activity and improves the morphology of the resulting ethylene polymers. Other organometallic compounds, such as diethylzinc, may also be used to modify the support.

Suitably the impregnated support contains from about 3 percent by weight to about 50 percent by weight, preferably from about 10 percent by weight to about 30 percent by weight, of the Mg/Ti/ED catalyst component.

The solution of titanium trichloride and magnesium dichloride in the electron donor compound may be spray dried rather than impregnated in a support. Spray drying may be effected by admixing the solution with a suitable filler; optionally heating the resulting slurry to a temperature as high as the boiling point of the electron donor compound; and then atomizing the slurry by means of a suitable atomizing device to form discrete spherically shaped particles. Atomization is effected by passing the slurry through the atomizer together with an inert drying gas, i.e., a gas which is nonreactive under the conditions employed during atomization. An atomizing nozzle or a centrifugal high speed disc can be employed to effect atomization. The volumetric flow of drying gas must considerably exceed the volumetric flow of the slurry to effect atomization of the slurry and removal of excess electron donor compound. Ordinarily the drying gas is heated to a temperature greater than the boiling point of the electron donor compound to as high as about 160°C to facilitate atomization of the slurry and removal of excess electron donor compound; however, if the volumetric flow of drying gas is maintained at a very high level, it is possible to employ temperatures below the boiling point of the electron donor compound. Atomization pressures of from about 1 psig to 200 psig are suitable.

Any solid particulate material which is inert to the other components of the catalyst system, and during subsequent polymerization, can be employed as filler for the solution of titanium trichloride and magnesium dichloride to form a slurry suitable for spray drying. Such materials can be organic or inorganic. Suitable fillers include silica, titanium dioxide, polystyrene, and calcium carbonate. Fumed hydrophobic silica is preferred because it imparts high viscosity to the slurry and good strength to the spray dried particles.

The particulate material employed as filler should have an average particle size no greater than 50 μm, preferably no greater than 10 μm. Like the particulate materials employed when the solution of titanium trichloride and magnesium dichloride is impregnated into a support, the particulate material employed as filler should be dry, i.e., free of absorbed water.

Sufficient filler should be admixed with the solution of titanium trichloride and magnesium dichloride to produce a slurry suitable for spray drying, i.e., a slurry containing such filler in an amount of from 0 percent by weight to about 15 percent by weight, preferably from about 2.5 percent by weight to about 10 percent by weight. When spray dried, such slurry produces discrete catalyst particles in which filler is present in an amount of from 0 percent by weight to about 50 percent by weight, preferably from about 10 percent by weight to about 30 percent by weight. The spray dried catalyst particles produced in this manner have an average particle size of from about 5 μm to about 200 μm, preferably from about 10 μm to about 30 μm.

To be useful in producing ethylene polymers, the impregnated or spray dried catalyst must be activated with a compound capable of transforming the titanium atoms in said catalyst to a state which will cause ethylene to effectively polymerize. Such activation is effected by means of an organoaluminum compound having the structure

$$AlR_dX_eH_f$$

wherein X is Cl or OR',

R and R' are saturated hydrocarbon radicals containing from 1 to 14 carbon atoms, which radicals may be the same or different,

e is 0 to 1.5,

f is 0 or 1, and

d + e + f + 3.

R and R' may be substituted with one or more substituents which are inert under the reaction conditions employed during polymerization. Preferably R and R' are alkyl radicals containing from 1 to 8 carbon atoms.

Such activator compounds can be employed individually or in combination thereof and include compounds such as $Al(C_2H_5)_3$, $Al(C_2H_5)_2Cl$, $Al_2(C_2H_5)_3Cl_3$, $Al(C_2H_5)_2H$, $Al(C_2H_5)_2(OC_2H_5)$, $Al(i-C_4H_9)_3$, $Al(i-C_4H_9)_2H$, $Al(C_6H_{13})_3$ and $Al(C_8H_{17})_3$.

If desired, the impregnated or spray dried catalyst may be partially activated before it is introduced into the polymerization reactor. However, any activation undertaken outside of the polymerization reactor should be limited to the addition of an amount of activator compound which does not raise the molar ratio of activator compound to electron donor in the catalyst beyond 2:1, as higher ratios have been found to substantially lower catalyst activity. In order to maintain maximum catalyst activity, the activator compound is preferably employed in an amount which will provide the catalyst with an activator compound to electron donor molar ratio of from about 0.1:1 to about 1:1. Such partial activation may be carried out in a hydrocarbon solvent slurry followed by drying of the resulting mixture, to remove the solvent, at temperatures of from about 20°C to about 80°C, preferably from about 50°C to about 70°C. The resulting dried product can then be fed to the polymerization reactor where the activation is completed with additional activator compound, which can be the same or a different compound. Alternatively, the hydrocarbon slurry containing both the catalyst and activator may be fed directly to the reactor. Such slurries generally contain from 1 weight percent to 75 weight percent of catalyst and activator.

On the other hand, the impregnated or spray dried catalyst may, if desired, be completely activated in the polymerization reactor without any prior activation outside of the reactor, in the manner described in U.S. Patent Nos. 4,383,095 and 4,376,062, the disclosures of which are incorporated herein by reference.

Polymerization is effected with the catalyst system of the present invention by contacting ethylene, or a mixture of ethylene and at least one alpha-olefin having 3 to 8 carbon atoms, with the two components of the catalyst system, i.e., the organoaluminum component and the titanium trichloride component. Polymerization can be effected employing either solution, slurry or gas phase techniques. Preferably, polymerization is effected in gas phase in a fluidized bed. Suitable fluid bed reaction systems useful for gas phase polymerizations are described, e.g., in U.S. Patent Nos. 4,302,565, 4,302,566 and 4,303,771, the disclosures of which are incorporated herein by reference.

The partially activated or totally unactivated titanium trichloride catalyst component and the required amount of organoaluminum cocatalyst necessary to complete activation of this component are usually introduced into the reactor through separate feed lines in order to more effectively control the amount of each of these materials in the reactor. However, if desired, they can be added together. In any event, the organoaluminum cocatalyst and the titanium trichloride component are added to the reactor in such amounts as to provide, in the reactor, a total titanium to aluminum atomic ratio of from about 10:1 to about 400:1, preferably from about 15:1 to about 60:1.

The organoaluminum cocatalyst component may be introduced into the reactor dissolved in an inert liquid solvent, i.e., a solvent which is nonreactive under the conditions employed during polymerization. Hydrocarbons such as isopentane, hexane, heptane, toluene, xylene, naphtha and mineral oil are preferred for this purpose. Generally, such solutions contain from 5 weight percent to 75 weight percent of the organoaluminum cocatalyst. If desired, less concentrated or more concentrated solutions can be employed, or, alternatively, the organoaluminum cocatalyst can be added in the absence of solvent, or, if desired, suspended in a stream of liquid monomer. When a solvent is employed and polymerization is conducted in gas phase, the amount of solvent introduced into the reactor should be carefully controlled so as to avoid the use of excessive quantities of liquid which would interfere with such polymerization.

The solvents employed to dissolve the organoaluminum cocatalyst may also be employed to introduce the titanium trichloride component into the reactor. Higher boiling solvents, such as mineral oil, are preferred for this purpose. While the solid titanium trichloride component may also be introduced into the reactor in the absence of solvent or suspended in liquid monomer, such solvents may be employed to disperse the solid catalyst component and facilitate its flow into the reactor. Such dispersions generally contain from 1 weight percent to 75 weight percent of the solid catalyst component.

The alpha-olefins which may be polymerized with ethylene contain from 3 to 8 carbon atoms per molecule. These alpha-olefins should not contain any branching closer than two carbon atoms removed from the double bond. Suitable alpha-olefins include propylene, butene-1, pentene-1, hexene-1, 4-methyl-pentene-1, heptene-1 and octene-1. The preferred alpha-olefins include propylene, butene-1, hexene-1, 4-methyl-pentene-1 and octene-1.

The temperature employed during polymerization can vary from about 10°C to about 115°C when polymerization is effected in gas phase or in a slurry, and from about 150°C to about 250°C when polymerization is effected in solution. When polymerization is conducted in gas phase, the temperature, of course, must be maintained below the sintering temperature of the polymers produced in order to prevent polymer agglomeration. On the other hand, the temperature employed during gas phase polymerizations must be sufficiently elevated to prevent substantial condensation of the reaction mixture to the liquid state, as such condensation will cause the polymer particles being produced to cohere to each other and likewise aggravate the polymer agglomeration problem. This difficulty is normally associated with the use of alpha-olefins having 5 or more carbon atoms which have relatively high dew points. While some minor condensation is tolerable, anything beyond this will cause reactor fouling.

When polymers having a density of from 0.91 g/cm³ to 0.97 g/cm³ are desired, temperatures of from about 75°C to about 115°C, preferably from about 75°C to about 100°C, are usually employed. When producing polymers having a density of less than 0.91 g/cm³, lower temperatures of from about 10°C to about 80°C, preferably from about 40°C to about 60°C, should be employed because of the lower sintering temperature of the product. In the latter case, it is also necessary to dilute the reaction mixture with a large quantity of a diluent gas to prevent agglomeration and sustain polymerization on a continuous basis, as described in European patent specification 0 120 503, by Frederick John Karol et al.

The pressure employed can vary from subatmospheric to superatmospheric. Pressures of up to about 7000 kPa, preferably of from about 70 kPa to about 3500 kPa, are suitable for gas phase, slurry and solution polymerizations.

If desired, polymerization may be conducted in the presence of an inert gas, i.e., a gas which is nonreactive under the conditions employed during polymerization. A chain transfer agent, such as hydrogen, may also be present. The reactor should, however, be maintained substantially free of undesirable catalyst poisons, such as moisture, oxygen, carbon monoxide, carbon dioxide, acetylene, and the like.

When polymerization is conducted in a fluid bed, the superficial gas velocity of the gaseous reaction mixture through the bed must exceed the minimum flow required for fluidization in order to maintain a viable fluidized bed.

Copolymers of ethylene with higher alpha-olefins, such as hexene, produced with the catalyst system of the present invention have an n-hexane extractable content up to 50 percent lower than the n-hexane extractable content of copolymers produced with a like catalyst system employing a titanium trichloride component obtained by reducing titanium tetrachloride with aluminum.

The following Examples are designed to illustrate the present invention, and are not intended as a limitation on the scope thereof. The various properties of the polymers produced in the Examples were determined according to the ASTM test methods listed in Table 1, and by the following method:

## Cyclohexane Extractibles

Plaques are prepared using the granular resin according to ASTM D-1928. These plaques are cut in half, and each piece weighed to the nearest 0.1 mg. These plaques are then immersed in boiling cyclohexane (81 °C) for a period of 4 hours. The plaques are then removed from the cyclohexane and dried under vacuum at 60 °C. The plaques are again weighed to the nearest 0.1 mg, and the extractibles content is given as the weight loss of the plaque, expressed as a percentage of its original weight. Additionally, extractibles can be evaluated using procedures set forth in copending application Serial No. 07/926,633. In this alternative procedure extractibles are determined from films rather than granules.

## Example 1

(a) Preparation of TiCl$_3$/MgCl$_2$ Catalyst Component Solution

Anhydrous tetrahydrofuran (THF, 5 L) was added to a 5 gallon vessel equipped with a ribbon agitator, and maintained under a nitrogen atmosphere (< 5 ppm O$_2$, H$_2$O). To the THF was added granular zinc metal (Zn, 162 g, 2.48 moles, particle size between 0.1 μm and 1 μm) and anhydrous magnesium dichloride (MgCl$_2$, 235 g, 2.47 moles). The mixture was continuously agitated and titanium tetrachloride (TiCl$_4$, 104.0 g, 0.548 moles) was added to the mixture over a period of 0.5 hour. The mixture was then heated to 65 °C during 0.5 hour, and held at 65 °C for 4 hours, during which time most of the MgCl$_2$ dissolved. The solution was then discharged from the vessel into another inert slurrying vessel by filtering through a 1 μm filter bag to remove unreacted Zn and undissolved MgCl$_2$ and ZnCl$_2$.

(b) Spray Drying of TiCl$_3$/MgCl$_2$ Catalyst Component

Fumed silica (CAB-O-SIL® TS-610, manufactured by the Cabot Corporation, 317.1 g) was added to the solution prepared as in Example 1(a) The mixture was stirred by means of a ribbon agitator during this time and for several hours thereafter to thoroughly disperse the silica in the solution. The temperature of the mixture was held at 70°C throughout this period and a nitrogen atmosphere (<5 ppm H$_2$O) was maintained at all times. The resulting slurry was spray dried using an open-cycle laboratory spray drier equipped with an externally-mixed two-fluid nozzle atomizer. Nitrogen gas was introduced into the spray drier at an inlet temperature of 107 °C, and the catalyst slurry was fed to the spray drier at a temperature of about 25 °C and a rate of 15 - 20 cc/hour. This feed rate was sufficient to maintain an outlet gas temperature of approximately 85 °C. The atomization pressure was slightly above atmospheric. The resulting spray dried catalyst contained 2.6 wt. % Ti, 6.3 wt. % Mg and 31.7 wt. % THF.

(c) Copolymerization of Ethylene with Hexene-1

A one-liter autoclave reactor was dried and purged by heating at 100°C under a stream of nitrogen (<5ppm H$_2$O) for 0.5 hour. After cooling the reactor to 50°C, 500 mL of anhydrous, deaerated hexane was added to the reactor, and catalyst prepared as in Example 1(b) (0.0219 g, 0.0127 mmol Ti) was added, followed by 5 ml of anhydrous, deaerated 1-hexene (< ppm $H_2O$) and triethylaluminum (TEAL, 0.32 mL, 15 % by weight TEAL in hexane, 0.50 mmol Al). The reactor was then sealed, the temperature of the slurry was raised to 85 °C, hydrogen ($H_2$, 500 standard cc, 0.022 moles) was added, and the reactor was pressurized with ethylene to a total pressure of 150 psig. The temperature was maintained at 85.0 °C and polymerization was allowed to continue for 45 minutes, during which time ethylene was continuously added to the reactor to maintain a constant pressure. The reactor was then cooled to 35°C, vented and opened, and the polymer slurry was removed. The polymer was stabilized by adding 1 mL of a 1 % by weight solution of Irganox® 1076 in toluene to the slurry, which was then air-dried for at least 2 hours to remove the bulk of the solvent, then vacuum-dried at 60 °C and < 200 torr for 8 hr.

## Comparative Example 1

(a) Preparation of $TiCl_3$ Catalyst Component

The solution of $TiCl_3$ in this example was prepared as in example 1(a), except using magnesium metal (Mg, 6.66 g, 0.274 moles) in place of Zn, and by using a smaller quantity of added $MgCl_2$ (209 g, 2.19 moles).

(b) Spray Drying of $TiCl_3$ Catalyst Component

The spray-dried catalyst component in this example was prepared as in Example 1(b), except using the solution prepared in Comparative Example 1(a) in place of the solution used in Example 1(a).

(c) Copolymerization of Ethylene with 1-Hexene

The spray dried catalyst prepared as in Comparative Example 1(b) was employed as in example 1(c) for the copolymerization of ethylene and 1-hexene. The results are shown in Table 1.

## Comparative Example 2

(a) Preparation of $TiCl_3/MgCl_2$ Catalyst Component Solution

The solution of $TiCl_3$ in this example was prepared as in example 1(a), except using the same molar amount of commercially-available $TiCl_3$ (as a eutectic with $1/3AlCl_3$) in place of $TiCl_4$, and dissolving it in THF together with the same molar amount of $MgCl_2$ as in Example 1(a).

(b) Spray Drying of $TiCl_3/MeGl_2$ Catalyst Component

The spray-dried catalyst component in this example was prepared as in Example 1(b), except using the solution prepared as in Comparative Example 1(a) in place of the solution prepared as in Example 1(a).

(c) Copolymerization of Ethylene with 1-Hexene

The spray dried catalyst prepared as described in Comparative Example 1(b) was employed as in example 1(c) for the copolymerization of ethylene and 1-hexene. The results are shown in Table 1.

## Example 2

(a) Preparation of Catalyst Support

Porous silica (Davidson 955, 500 grams) was dehydrated by heating at a temperature of 600°C, and was then slurried in 3 liters of isopentane. The slurry was stirred while 186 ml. of a 20 percent by weight solution of triethylaluminum in hexane was added to it over a 15 minute period. The resulting mixture was then dried under a nitrogen purge at 60°C over a period of about 4 hours to provide a dry, free-flowing powder.

(b) Preparation of $TiCl_3$ Catalyst Component Solution

Titanium tetrachloride bis(tetrahydrofuran) ($TiCl4·2THF$, 0.334 g, 0.00100 mole) and $MgCl_2$ (0.287 g, 0.00300 mole) were added to a 100 mL flask in a glove box filled with argon containing < 2 ppm each of water and oxygen. The flask was stoppered, removed from the glove box, and attached to a manifold filled with nitrogen. Anhydrous THF (30 mL) was added to the flask, and the resulting slurry was heated to 50°C to dissolve the solid materials, yielding a clear yellow solution. Granular Zn (0.33 g, 0.0050 moles) having a particle size in the range of from 0.1 μm to 1 μm was then added to the solution and the resulting slurry was stirred at room temperature for three hours. During this time the color of the solution changed from yellow to pale purple. The solution was then filtered to remove the $ZnCl_2$ produced in the reaction, any undissolved $MgCl_2$, and any unreacted Zn.

(c) Impregnation of the $TiCl_3$ Catalyst Component

The filtrate prepared in accordance with Example 2(b) was added to silica (3.3 g) prepared in accordance with Example 2(a) using inert transfer techniques and a nitrogen-filled manifold. The resulting slurry was stirred at room temperature for 20 minutes and then dried under vacuum at < 40 °C over a period of about 2 hours to provide a dry, pale lavender colored free-flowing powder. This powder was stored in an argon-filled glove box.

(d) Copolymerization of Ethylene with 1-Hexene

The impregnated catalyst prepared according to Example 2(c) was used to copolymerize ethylene with 1-hexene in the same manner as described in Example 1(c). The results are described in Table 1.

Example 3

(a) Preparation of the TiCl3/MgCl2 Catalyst Component Solution

The solution was prepared in the same manner as described in Example 2(b), except using granular manganese metal (Mn, 0.55 g, 0.010 mol) in place of the Zn.

(b) Preparation of the Supported TiCl3/MgCl2 Catalyst Component

The catalyst component was prepared in the same manner as described in Example 2(c), except using the solution prepared according to Example 3(a) in place of the solution prepared according to Example 2(b).

(c) Copolymerization of Ethylene and 1-Hexene

The catalyst prepared according to Example 3(b) was used to copolymerize ethylene and 1-hexene as described in Example 2(d). The results are listed in Table 1.

Comparative Example 3

(a) Preparation of the TiCl3/MgCl2 Catalyst Component Solution

The solution was prepared in the same manner as described in Example 2(b), except using aluminum foil (Al, 0.14 g, 0.0050 mol) in place of the Zn.

(b) Preparation of the Supported TiCl3/MgCl2 Catalyst Component

The catalyst component was prepared in the same manner as described in Example 2(c), except using the solution prepared according to Example 3(a) in place of the solution prepared according to Example 2(b).

(c) Copolymerization of Ethylene and 1-Hexene

The catalyst prepared according to Example 3(b) was used for ethylene/1-hexene copolymerization as described in Example 2(d). The results are listed in Table 1.

(c) Copolymerization of Ethylene and 1-Hexene

The catalyst prepared according to Example 3(b) was used for ethylene/1-hexene copolymerization as described in Example 2(d). The results are listed in Table 1.

## TABLE I

| | EX. 1 | COMP. EX. 1 | COMP. EX. 2 | EX. 2 | EX. 3 | COMP. EX.3 |
|---|---|---|---|---|---|---|
| **Polymer Properties** | | | | | | |
| Reducing Metal | Zn | Mg | Al | Zn | Mn | Al |
| Bulk Density[a] | 0.255 | 0.224 | 0.260 | 0.341 | 0.333 | 0.332 |
| Melt Index[b] | 0.37 | 0.43 | 0.37 | 0.24 | 0.20 | 0.32 |
| Flow Index[c] | 10.8 | 13.6 | 11.8 | 7.1 | 6.4 | 9.6 |
| Melt Flow Ratio[d] | 29 | 32 | 32 | 30 | 32 | 30 |
| Catalyst Activity[e] | 9200 | 8700 | 9400 | 4100 | 4400 | 5100 |

[a]$g/cm^3$. Measured according to ASTM D-1895, Method B.

[b]$dg/min$. Measured according to ASTM D-1238, Condition E, at 190 °C, using a 2.1 kg weight.

[c]$dg/min$. Measured according to ASTM D-1238, Condition F, at 190 °C using a 21 kg weight.

[d]Ratio of Flow Index: Melt Index.

[e]$(g\ PE)/(mmol\ Ti)/(hr.)/(100\ psi\ C_2H_4)$. Weight of polymer produced normalized for the number of millimoles of Ti in the catalyst used, the number of hours of polymerization time, and the multiple of 100 psi of ethylene partial pressure.

Example 4

The resins prepared in Examples 1 through 3 are evaluated for reduced level cyclohexane extractibles in accordance with the procedures set forth herein.

**Claims**

1.  A catalyst system comprising
    (a) an organoaluminum component, and
    (b) a titanium trichloride component prepared by (i) reducing titanium tetrachloride with a metal having a reducing potential higher than -1.5 V (vs. hydrogen electrode standard) by treating titanium tetrachloride in an electron donor solvent with a sufficient amount of such metal to reduce said titanium tetrachloride to titanium trichloride and produce an insoluble chloride of such metal; (ii) removing the insoluble chloride of said reducing metal by filtration; (iii) adding magnesium dichloride to the resulting solution to produce a catalyst component having a Mg/Ti ratio of from 1:1 to 56:1; and then (iv) impregnating said solution in a suitable support or, alternatively, spray drying the solution with or without a suitable filler, to obtain discrete particles of catalyst.

2.  A catalyst system as claimed in claim 1 wherein the reducing metal is zinc, manganese or a mixture thereof.

3.  A catalyst system as claimed in claim 1 or claim 2 wherein the electron donor solvent is
    (i) an alkyl ester of a saturated aliphatic carboxylic acid having 1 to 4 carbon atoms;
    (ii) an alkyl ester of an aromatic carboxylic acid having 7 or 8 carbon atoms;
    (iii) an aliphatic ether having 2 to 8 carbon atoms;
    (iv) a cycloaliphatic ether having 4 or 5 carbon atoms; or
    (v) an aliphatic ketone having 3 to 6 carbon atoms.

4.  A catalyst system as claimed in any one of claims 1 to 3 wherein the electron donor solvent is tetrahydrofuran, the reducing metal is zinc, sufficient magnesium dichloride is added to the solution to produce

10

a catalyst component having a Mg/Ti ratio of from 1.5:1 to 10:1 and the solution is impregnated in a silica support.

5. A catalyst system as claimed in any one of claims 1 to 3 wherein the electron donor solvent is tetrahydrofuran, the reducing metal is zinc, sufficient magnesium dichloride is added to the solution to produce a catalyst component having a Mg/Ti ratio of from 1.5:1 to 15:1 and the solution is spray dried using fumed hydrophobic silica as the filler.

6. A process for polymerizing ethylene which comprises contacting ethylene, or a mixture of ethylene and at least one alpha olefin containing from 3 to 8 carbon atoms, with a catalytically effective amount of a catalyst system comprising
    (a) an organoaluminum component, and
    (b) a titanium trichloride component prepared by (i) reducing titanium tetrachloride with a metal having a reducing potential higher than -1.5 V (vs. hydrogen electrode standard) by treating titanium tetrachloride in an electron donor solvent with a sufficient amount of such metal to reduce said titanium tetrachloride to titanium trichloride and produce an insoluble chloride of such metal; (ii) removing the insoluble chloride of said reducing metal by filtration; (iii) adding magnesium dichloride to the resulting solution to produce a catalyst component having a Mg/Ti ratio of from 1:1 to 56:1; and then (iv) impregnating said solution in a suitable support or, alternatively, spray drying the solution with or without a suitable filler, to obtain discrete particles of catalyst.

7. A process as claimed in claim 6 wherein ethylene is copolymerized with hexane-1.

8. A process as claimed in claim 6 or claim 7 wherein the reducing metal is zinc, manganese or a mixture thereof; and the electron donor solvent is
    (i) an alkyl ester of a saturated aliphatic carboxylic acid having 1 to 4 carbon atoms;
    (ii) an alkyl ester of an aromatic carboxylic acid having 7 or 8 carbon atoms;
    (iii) an aliphatic ether having 2 to 8 carbon atoms;
    (iv) a cycloaliphatic ether having 4 or 5 carbon atoms; or
    (v) an aliphatic ketone having 3 to 6 carbon atoms.

9. A process for producing a titanium trichloride composition suitable for use as a component of a Ziegler-Natta catalyst system which comprises (i) reducing titanium tetrachloride to titanium trichloride by treating titanium tetrachloride in an electron donor solvent with a sufficient amount of a metal having a reducing potential higher than -1.5 V (vs. hydrogen electrode standard) to reduce said titanium tetrachloride to titanillm trichloride and produce an insoluble chloride of such metal; and (ii) removing the insoluble chloride of said reducing metal by filtration.

10. A process as claimed in claim 9 wherein the reducing metal is zinc, manganese or a mixture thereof; and the electron donor solvent is
    (i) an alkyl ester of a saturated aliphatic carboxylic acid having 1 to 4 carbon atoms;
    (ii) an alkyl ester of an aromatic carboxylic acid having 7 or 8 carbon atoms;
    (iii) an aliphatic ether having 2 to 8 carbon atoms;
    (iv) a cycloaliphatic ether having 4 or 5 carbon atoms; or
    (v) an aliphatic ketone having 3 to 6 carbon atoms.

**European Patent Office**

# EUROPEAN SEARCH REPORT

Application Number

EP 94 30 9424

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,Y<br>D | EP-A-0 584 626 (UNION CARBIDE CORPORATION)<br>* the whole document *<br>& US-A-926 633 (COPENDING APPLICATION SERIAL)<br>--- | 1 | C08F10/00<br>C08F4/657 |
| Y | CHEMICAL ABSTRACTS, vol. 89, no. 10,<br>4 September 1978, Columbus, Ohio, US;<br>abstract no. 75661n,<br>OSAWA 'Polymerization catalysts for ethylene'<br>page 14 ;column 1 ;<br>* abstract *<br>& JP-A-7 847 483 (...)<br>----- | 1 | |

TECHNICAL FIELDS
SEARCHED    (Int.Cl.6)

C08F

The present search report has been drawn up for all claims

| Place of search | Date of completion of the search | Examiner |
|---|---|---|
| THE HAGUE | 4 April 1995 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)